# EUROPEAN PATENT APPLICATION

(11) **EP 0 925 894 A1**
(43) Date of publication of application: **30.06.1999**
(21) Application number: 97830709.8
(22) Date of filing: 23.12.1997
(51) Int. Cl.: B29C 33/38, B29C 33/52, B29C 45/44, B29C 33/00, B29C 45/00

(54) **A process and an injection mold assembly for making moulds and prototypes**

(71) Applicant: P.C.R. S.R.L., 20044 Bernareggio (Milano) (IT)
(72) Inventor: Panzeri, Luca, 22050 Lomagna (Lecco) (IT)
(74) Representative: Sutto, Luca

(57) **Abstract**

It is provided a process for making moulds and functional prototypes consisting in preparing one primary physical model (4), inserting said primary model in a matrix (2) having a recess (3) suitable for providing to the primary model (4) a hollow space (5) expected to define a mould, introducing in said hollow space (5) a material suitable for injection moulding so as to carry out said mould, and injecting a material suitable for preparing a functional prototype in the part corresponding to the primary model (4). It is also provided an injection moulding assembly (1) for the realisation of moulds and functional prototypes comprising a matrix (2) suitable for housing a primary physical model (4) and for conforming a counter-shaped mould with regard to the primary model, at least one first injection channel (6) for forming one mould into the matrix using a suitable material for injection moulding, and at least one injection device (7), having a second injection channel (8) in the mould for the injection of a material suitable for obtaining a functional prototype.

## Description

The present invention relates to a process and an injection mould assembly for making moulds and functional prototypes.

As known in the prior art using modern techniques for a quick manufacturing of prototypes, e.g. by stereo-lithography, single physical model of pieces and details can be directly made from three-dimensional drawings developed by electronic devices.

Such physical models, generally being composed of a photosensitive vinyl, acrylic or epoxy based resin, are almost exclusively suitable for making conceptual controls, i.e. for shape and appearance checks and for estimate studies related to preparation or packaging, and are sparely suitable for functional type evaluation, i.e. for use, strength tests and the like.

However, it must be noted that mainly for projects during their final step of development, it is frequently necessary to have one or two dozen pieces or prototypes in order to perform at least a first set of operating tests, yet not definite and complete, but anyway requiring some materials, e.g. polyurethane resins having higher characteristics than those shown by the materials used in the quick manufacturing of said prototypes. The prior art regarding the preparation of said prototypes expects the use of suitable cheap moulds quickly obtainable from particular techniques, i.e. in rubbery material.

However, such moulds composed of rubbery material allow the realisation of only a limited number of prototypes because they tend to deteriorate after a certain number of uses. Further and mainly rubbery moulds show a serious limit, that is not to allow the preparation of prototypes using the definite estimate material for the production, because with these moulds it is not possible to perform injection processes at high pressure and to use particular materials, which could damage them.

In practice, the prototypes obtained from rubbery material moulds cannot be subjected to use and strength tests as those pieces coming from the final productions but they can only be submitted for example to assembling tests or anyway to partially functional tests.

In order to obtain prototypes suitable for complete functional evaluations, mainly at a structural strength level, the prior art requires the realisation of proper production moulds, i.e. moulds made of steel, aluminium alloy or other suitable material, said moulds obtained using normal technologies, for example by material removing. As a matter of fact it is possible to produce pieces made by the final resin and in operative conditions really corresponding to the final ones of a full-scale production, only using such kind of production moulds.

Accordingly, the prior art either provides prototypes not completely corresponding to the final product characteristics or presents high costs and very long manufacturing times when giving pieces completely corresponding to the final production.

In this situation the technical purpose at the basis of the present invention is to provide a process and an injection mould assembly for making moulds and functional prototypes able to remove said disadvantages substantially.

In the field of said technical purpose it is an important object of the present invention to provide a process and an injection mould assembly for making prototypes suitable for approval and for complete and final functional tests having low costs and short manufacturing times.

Another important purpose of the present invention is to provide a process and an injection mould assembly suitable for making a mould for prototypes suitable for approval and final functional tests, said mould being directly and easily transformed in a production mould in very short times and with limited costs.

The above technical purpose and the above specified objects are substantially achieved by a process and an injection mould assembly according to what reported in the claims herewith.

It is now reported, as a significant but not limiting example, the preferred but not exclusive embodiment description of an injection mould assembly according to the present invention shown in the drawings herewith in which:

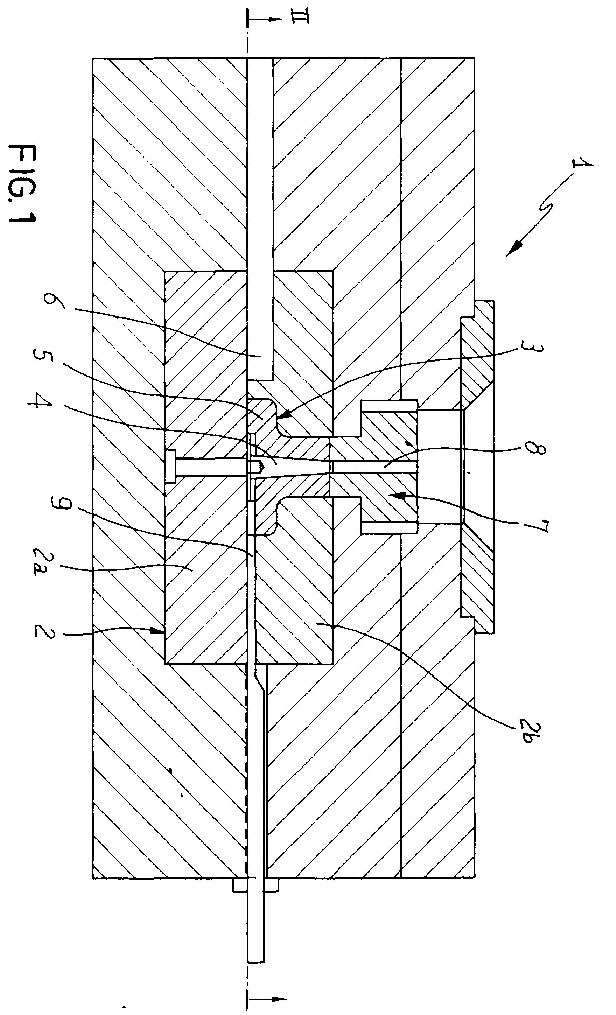

- Figure 1 shows a cross section of an injection mould assembly according to the present invention;

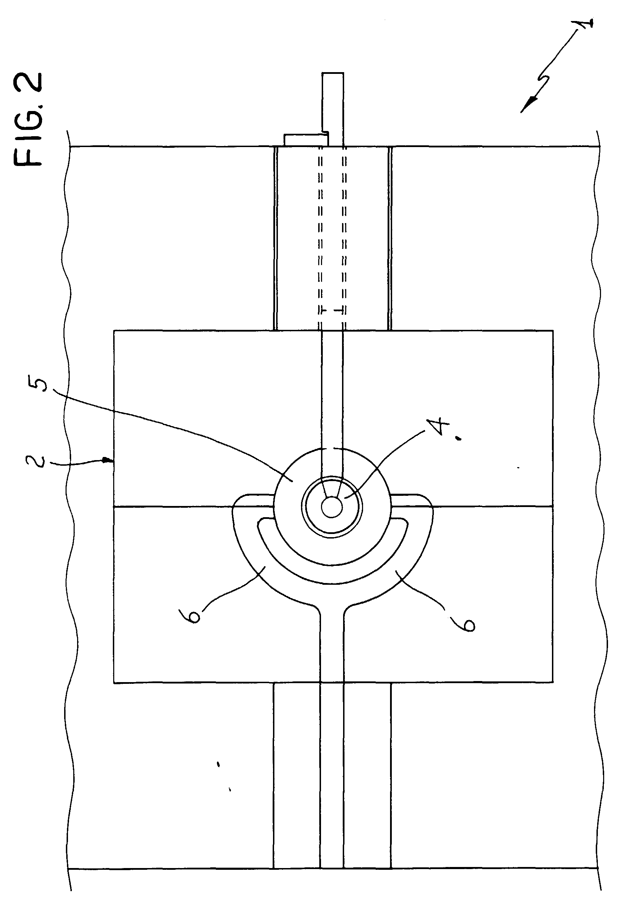

- Figure 2 shows a view according to the viewing plane II-II of Figure 1.

With reference to the Figures the process according to the present invention first consists of the arrangement of a primary physical model consisting of a first material having limited mechanical characteristics being substantially suitable only for conceptual controls where appearance and shape are particularly important.

Said primary physical model can be advantageously obtained from a quick prototype making technology known in the prior art, for example based on stereolytographic processes.

The used material can be a wax-like compound or a phenol-formaldehyde resin, able to resist to not very high temperatures, for example about 200° C.

Said primary model is inserted in a matrix having a shaped recess with a right volume and shape, suitable to house said model and to make an hollow space around it to conform a mould being counter-shaped to the primary model.

An injection material is further injected in said hollow space, said material being able to be injected at a lower temperature than that of the melting point of the material forming the physical primary model. For example said injection material can be a mixture composed by a powder and a binder able to make said mixture suitable for injection moulding.

The binder content is normally 35-50% by volume. In principle, said powder can be any, providing that it can be reduced at a very low particle size value. It must be noted that the more said particles are round shaped the better the powder for said process is. A suitable compound for injection moulding can be obtained only by mixing the powder with the binder.

The binder must then have the characteristic to be completely eliminated from the piece forming the mould without changing its geometry.

For example the usable powder could be metal powders or metal alloy powders, oxi-ceramic, ultra-rigid ceramic, and super-alloys ones.

The injection moulding of said mixture is performed at a lower temperature than that of the melting point of the first material making the physical primary model in order not to damage it and therefore to obtain a mould being perfectly counter-shaped to the primary model.

After waiting the necessary time for the mould-shaped mixture hardening, which is generally very short (e.g. a dozen of seconds), the mould becomes a piece having already high strength performances suitable for making functional prototypes using the same resins and in the same operating conditions which will be expected in the final production.

It must be noted that thermoplastic or thermosetting resins can be advantageously used as injection materials instead of powder and binder mixtures, those resins being able to be injected at sufficiently low temperatures (T<200 C), but having a sufficient mechanical strength if cross-linked.

After or contemporaneously to the removing of the primary model from the mould, the injection is performed in the latter, in the part corresponding to the primary model itself, injecting a second material suitable for forming the desired functional prototypes, i.e. having the above mentioned characteristics corresponding to the resins which will be used in the final production cycle.

It must be noted that the primary model removing can be obtained for mould extraction from the mould of the primary model itself otherwise, if the injection temperature of the second material intended for forming prototypes is higher than the melting point of the first material forming the primary model, in practice the removing of the latter can be obtained contemporaneously to the injection of the second material by melting and ejection from a special exhaust channel provided in the matrix in which the mould is inserted.

If the injection temperature of the second material in the mould is higher than a pre-determined temperature, e.g. 400 C, the decomposition of the binder of the material constituting the mould is expected for, the mould of the latter remains anyway stable and suitable for forming a high number of functional prototypes.

It must be noted that using a powder and binder mixture as injection material, when the prototype preparation step is finished, the mould used for said prototypes can be directly and quickly transformed in a final mould for the production of pieces on industrial scale exposing them to a sintering process already known in the prior art, i.e. to a heating up to temperature of 1600-1800 C, if the application and strength test results are satisfactory.

With reference to the above Figures the injection mould assembly for making moulds and functional prototypes is globally indicated with a number 1.

It includes an openable matrix 2, for example composed of a base 2a and of a mobile body 2b, having a recess 3 rightly sized and shaped for housing a primary physical model 4, for example obtained from a quick prototype technology in a first material substantially suitable for conceptual controls only. Moreover a recess 3 is arranged for forming a hollow space 5 intended to define a mould counter-shaped to the model itself, around a model 4.

A matrix 2 shows a first injection channel 6 for introducing an injection material in the hollow space 5, e.g. a mixture of a powder material and a binder as the above said suitable for injection moulding.

In the part corresponding to the primary model 4 and by an injection device 7 having a second injection channel 8 it is possible to inject an expected second material for preparing a functional prototype and advantageously corresponding to the final material to be used for production on industrial scale of pieces corresponding to the primary model 4 and of the prototypes thereof.

Finally in the matrix 2 there is an exhaust channel 9 communicating with the part of the recess 3 where the model 4 places itself and through said channel said model can be removed by melting instead of being extracted from the mould 5 simultaneously to the injection of said material for functional prototypes if a material for prototypes having a higher temperature than the melting point of the material constituting the primary model 4 itself, is injected by the injector 7.

It must be specified that in the example drawings herewith, the moulding assembly consists of one single station including only one matrix 2 for the first material injection and only one injection device 7 for the injection of the second material.

However, it can be also expected that the moulding assembly has more than one single matrix 2 and more than one injection device.

From a construction point of view the single or multiple matrix 2 and the single or multiple injection devices 7 can be in the same way located in separate stations these being approachable each other for carrying out the different steps of the process through translation/rotation movements.

The present invention achieves important advantages.

First of all the process allows prototypes suitable for complete tests to be obtained in a short time and, therefore, for possible approval also without the need to produce expensive and already final moulds using prior art technologies requiring higher and higher production times.

In addition, it must be pointed out that contemporaneously to the phase of construction of functional prototypes having the above mentioned properties, this process allows the arrangement of a mould consisting of a semifinished product to be directly and quickly transformed in the final production mould, if the control tests on prototypes are positive.

The final production mould can be therefore made at lower cost and in shorter times than those traceable in the prior art methods.

## Claims

1. Process for making moulds and functional prototypes characterized in that the following operation steps are included:
- preparing one primary physical model (4) in a first material substantially suitable for conceptual controls only;
- inserting said primary model (4) in a matrix (2) having a recess (3) suitable for housing said primary model and for forming, co-operating with it, a hollow space (5) for conforming a counter-shaped mould with regard to said primary model;
- introducing in said hollow space (5) of said matrix an injection material for carrying our said mould at a melting temperature lower than the first material melting temperature;
- waiting for hardening of said injection material;
- removing said primary model (4) from the mould;
- injecting a second material suitable for preparing a functional prototype in said mould in the part corresponding to said primary model.

2. Process according to Claim 1 characterized in that said removing of the primary model (4) is obtained by extraction of said primary model from said mould.

3. Process according to Claim 1 characterized in that said second material shows an injection temperature higher than the melting point of said first material and in that said removing of said primary model from said mould is carried out by melting of said first material simultaneously to said second material injection.

4. Process according to Claim 1 characterized in that said primary physical model (4) is obtained using a quick technology for making prototypes.

5. Process according to Claim 4 characterized in that said quick technology for making prototypes is based on stereolithography.

6. Process according to Claim 1 characterized in that the injection material is a mixture of a powder material and a binder suitable for injection.

7. Process according to Claim 6 characterized in that, when the functional prototype preparation is finished, it is expected a further step where said mould is submitted to a sintering process so as to transform said mould for prototypes in a final industrial production mould.

8. Process according to the claim 1 characterized in that the injection material is a thermoplastic or a thermosetting resin.

9. Injection moulding assembly for making moulds and functional prototypes characterized in that said assembly includes:
- a matrix (2) having a shaped recess (3) suitable for housing a primary physical model (4) prepared in a first material substantially suitable for conceptual controls only, said recess and said primary model (4) forming a hollow space (5) intended to conform a counter-shaped mould with regard to the primary model;
- at least one first injection channel (6) for introducing an injection material in said hollow space (5); and
at least one injection device 7 having a second injection channel (8) for the injection of a second material suitable for obtaining a functional prototype in said mould in the part corresponding to said primary model (4).

10. Assembly according to Claim 8 characterized in that said matrix (2) shows at least one exhaust channel (9) which can be put in connection with the part of said recess (3) corresponding to said primary model (4).
